Europäisches Patentamt

European Patent Office

Office européen des brevets

(11) Publication number: **0 288 882**
**A2**

(12) # EUROPEAN PATENT APPLICATION

(21) Application number: 88106252.5

(22) Date of filing: 20.04.88

(51) Int. Cl.4: **B60C 27/10 , B60C 27/16**

(30) Priority: 20.04.87 JP 96984/87

(43) Date of publication of application:
**02.11.88 Bulletin 88/44**

(84) Designated Contracting States:
**CH DE FR LI**

(71) Applicant: **Bridgestone Corporation**
**10-1, Kyobashi 1-Chome Chuo-Ku**
**Tokyo 104(JP)**

(72) Inventor: **Aramaki, Kuniori**
**2034, Kamitkurata-cho Totsuka-ku**
**Yokohama-shi Kanagawa(JP)**
Inventor: **Fukai, Toshio**
**161-27, Naze-choe Totsuka-ku**
**Yokohama-shi Kanagawa(JP)**

(74) Representative: **Dreiss, Hosenthien &**
**Fuhlendorf**
**Gerokstrasse 6**
**D-7000 Stuttgart 1(DE)**

(54) Fastener for tyre slippage preventing device.

(57) Disclosed is a fastener for a tyre slippage preventing device which is used to mount the tyre slippage preventing device on the periphery of a tyre. The distal end of each of arm portions radially extending outward from a ring-shaped connecting portion is provided with an engaging hole with which a fitment connected to the tyre slippage preventing device is engaged. Therefore, the fitments of the tyre slippage preventing device can be directly engaged with the engaging holes of the fastener.

FIG.1

EP 0 288 882 A2

# FASTENER FOR TYRE SLIPPAGE PREVENTING DEVICE

## BACKGROUND OF THE INVENTION

Field of the Invention

The present invention relates to a fastener for a tyre slippage preventing device which may in particular be suitably used with a flexible tyre slippage preventing device made of rubber or a synthetic resin.

Description of the Related Art:

Ladder-or net-shaped tyre slippage preventing devices made of rubber or urethane elastomer have been known.

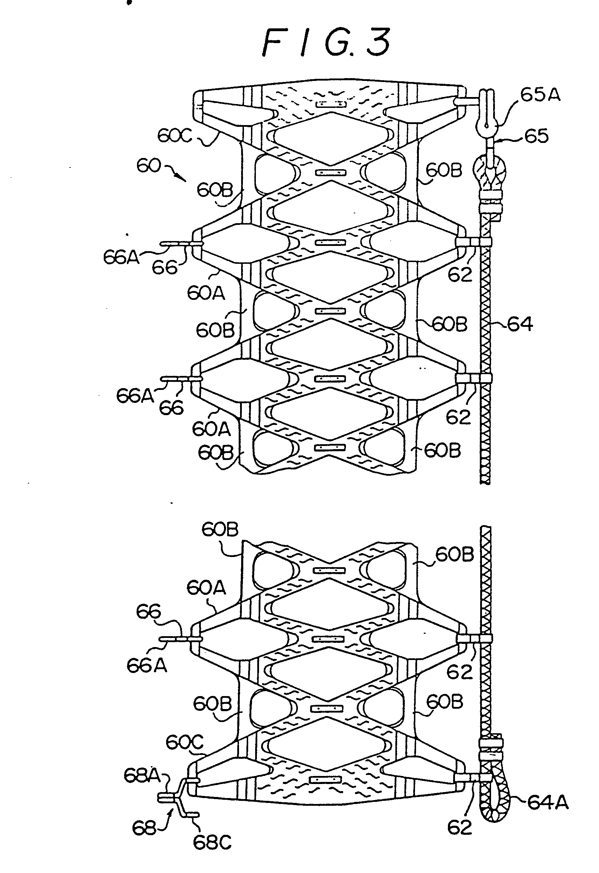

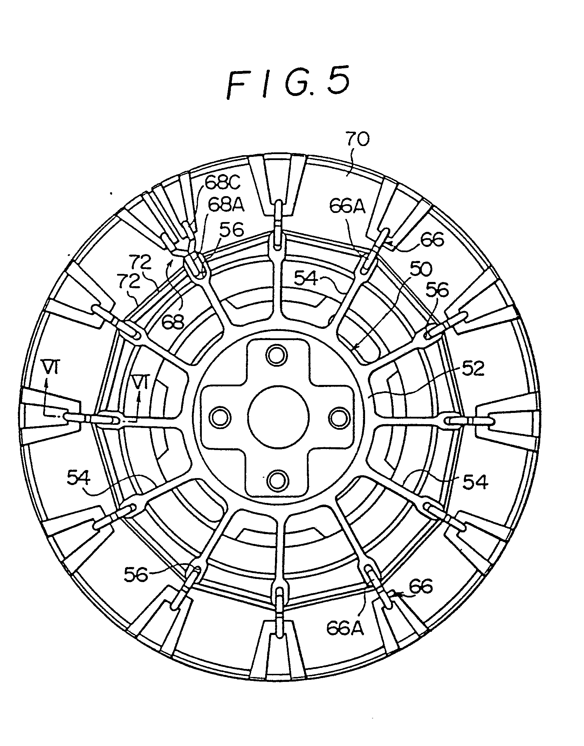

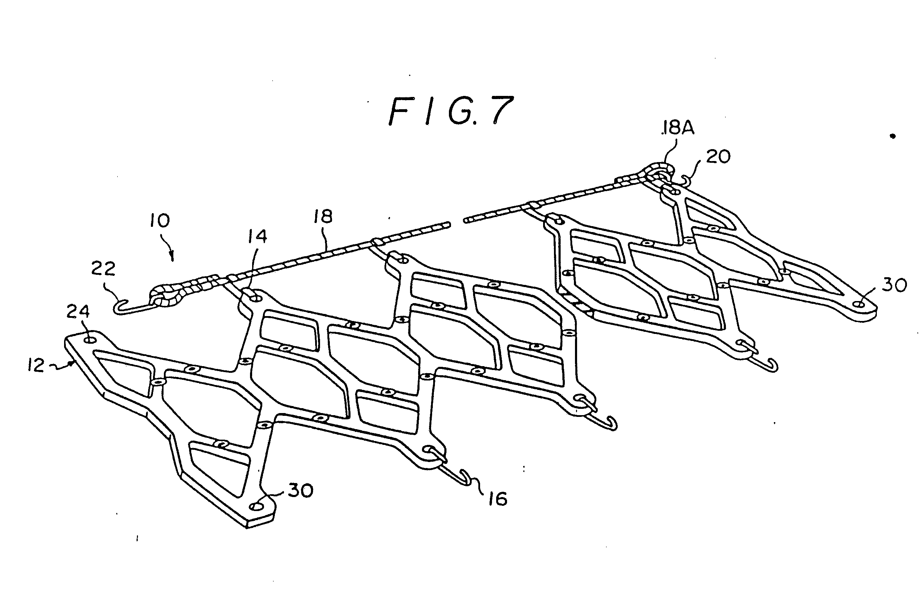

Fig. 7 shows one example of a tyre slippage preventing device of the above-described type. A plurality of hooks 14 and 16 are respectively connected to the two lateral edges of a body 12 of the tyre slippage preventing device in such a manner that they are disposed in a line parallel to the edges of the body 12. An inner fastener 18 which may be a rope or a wire rope made of a resin having a relatively small modulus of stretch is engaged with the hooks 14 connected to one edge. A joint hook 20 which is engaged with the body 12 is connected to one end of the inner fastener 18, and a joint hook 22 which connects the two ends of the inner fastener 18 is connected to the other end.

The body 12 is placed around a tyre in such a manner that the side of the body to which the hooks 14 are connected is disposed at the inner side of the tyre. The inner fastener 18 is formed into a ring-like shape by hooking the joint hook 22 to a loop portion 18A attached to the joint hook 20 and by hooking the joint hook 20 to an inner joint hole 24 formed in the body 12.

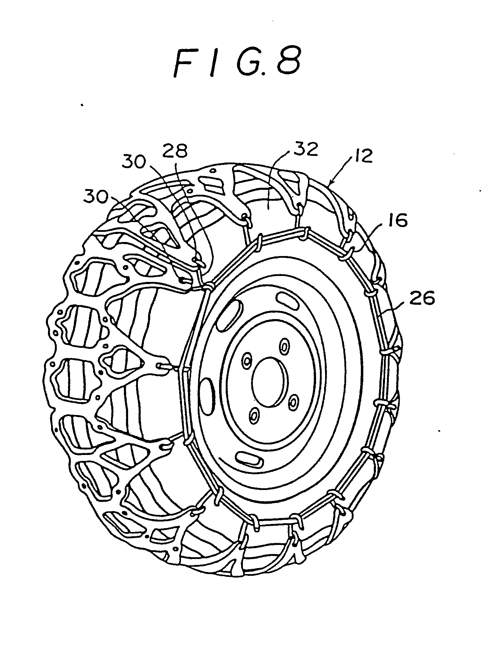

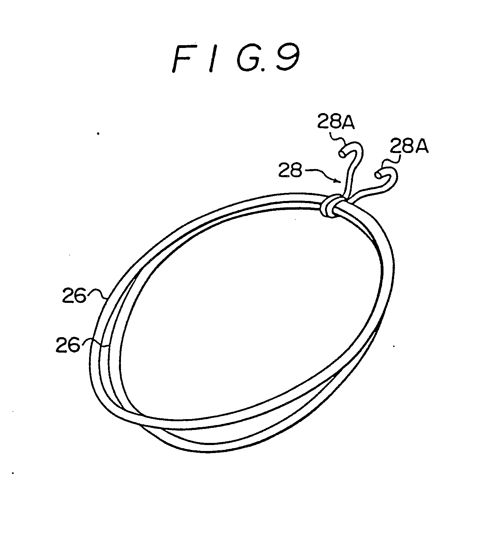

Two outer fasteners 26, each of which consists of an elastic ring such as a rubber ring, are engaged with the hooks 16, as shown in Fig. 8. A joint hook 28 which is bifurcated to have two hooks 28A is connected to the outer fasteners 29, as shown in Fig. 9. The hooks 28A of the joint hook 28 are received by two outer joint holes 30 formed in the body 12.

Thus, the body 12 is formed to assume a cylindrical shape and is mounted on a tyre 32 by means of the inner fastener 18 and the outer fasteners 26.

With the tyre slippage preventing device mounted on the tyre with the aid of such outer fasteners 26, if a sideward force suddenly acts on the tyre 32 as the result of the driving wheel being turned violently, the portion of the body 12 which is in touch with the ground may shift from the periphery of the tyre 32 and become disengaged from the tyre 32 so as to be dragged in toward the axle.

Further, the outer fasteners 26 cannot serve their function as fasteners if they should happen to be cut at one location.

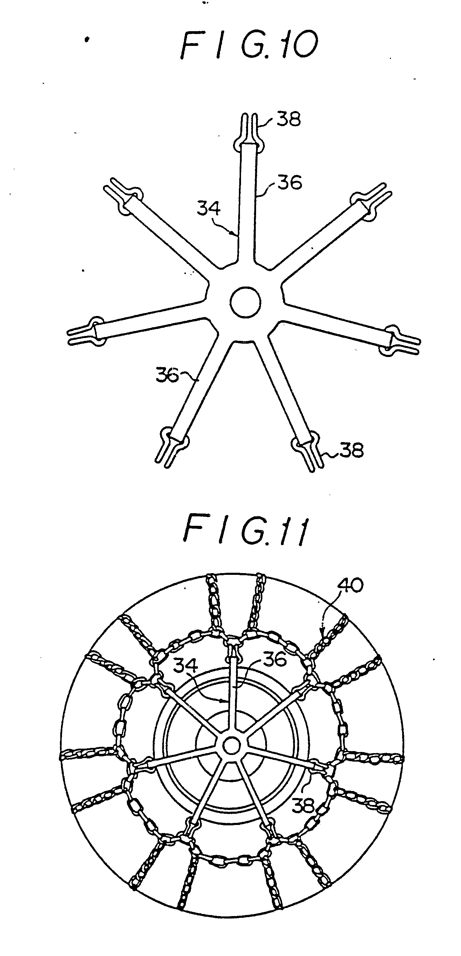

In order to obviate these problems, Japanese Utility Model Laid-Open No. 110387/1983 proposes a fastener of the type shown in Fig. 10. In this fastener, a body 34 of the fastener is made of an elastic material and has band portions 36. A hook 38 which is connected to the distal end of each of the band portions 36 is engaged with a tyre chain 40 such as that shown in Fig. 11.

If this fastener is applied to the tyre slippage preventing device having the body 12 shown in Fig. 7, however, the hooks 38 connected to the fastener body 34 are engaged with the hooks 16 connected to the body 12 which involves a complicated coupling structure.

Further, in this coupling structure, interference between the hooks 16 and 38 causes both of them to suffer from wear and/or bending.

## SUMMARY OF THE INVENTION

Accordingly, an object of the present invention is to provide a fastener for a tyre slippage preventing device which is capable of preventing the body of the tyre slippage preventing device from becoming disengaged from the periphery of the tyre and being dragged in toward the axle, and which has a simple structure which enables the fastener to be coupled to the tyre slippage preventing device body.

To this end, there is provided a fastener for a tyre slippage preventing device which is characterized in that a ring-shaped connecting portion and arm portions extending radially outward from the connecting portion are formed from an elastic material as one unit, and that the distal end of each of the arm portions is provided with an engaging hole with which a fitment connected to the body of the tyre slippage preventing device may be engaged.

In the thus-arranged fastener, the engaging holes formed in the fastener are directly engaged with the hooks connected to the body of the tyre slippage preventing device.

## BRIEF DESCRIPTION OF THE DRAWINGS

Fig. 1 is a plan view of a fastener for a tyre slippage preventing device, showing an embodiment of the present invention;

Fig. 2 is a cross-section taken along the line of II - II of Fig. 1;

Fig. 3 is a plan view of the body a tyre slippage preventing device that is combined with the fastener of Fig. 1;

Fig. 4 is a perspective view of a joint hook mounted on the tyre slippage preventing device of Fig. 3;

Fig. 5 is a side view showing a state wherein the body of the tyre slippage preventing device of Fig. 3 is mounted on a tyre using the fastener of Fig. 1;

Fig. 6 is a cross-section taken along the line VI - VI of Fig. 5;

Fig. 7 is a perspective view of one example of the body of a tyre slippage preventing device formed of a flexible material;

Fig. 8 is a perspective view, showing a state wherein the body of the tyre slippage preventing device of Fig. 7 is mounted on a tyre;

Fig. 9 a perspective view of an outer fastener used to mount the body of the tyre slippage preventing device of Fig. 7 on the tyre in the manner as shown in Fig. 8;

Fig. 10 is a plan view of a known outer fastener; and

Fig. 11 is a side elevational view, showing a state wherein a tyre chain is mounted on a tyre using the outer fastener of Fig. 10.

## DESCRIPTION OF THE PREFERRED EMBODIMENT

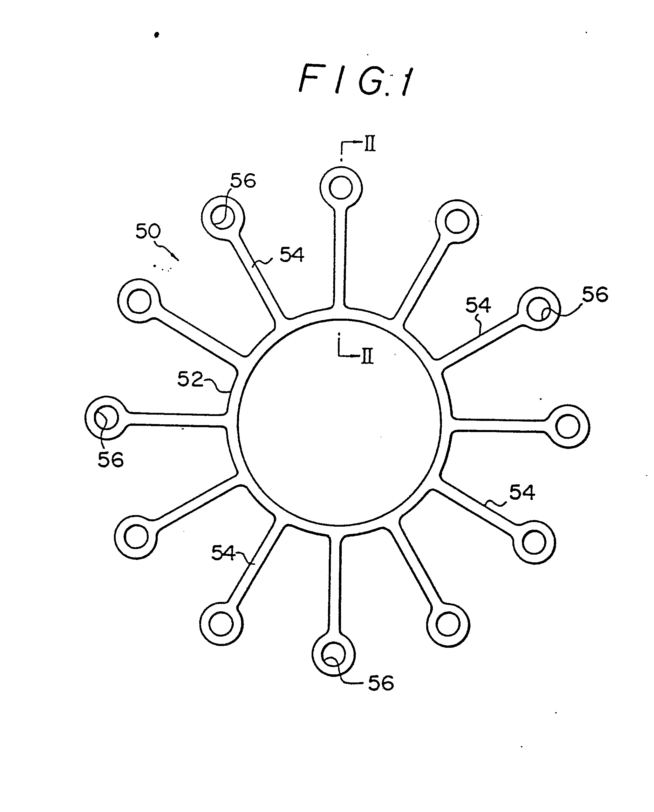

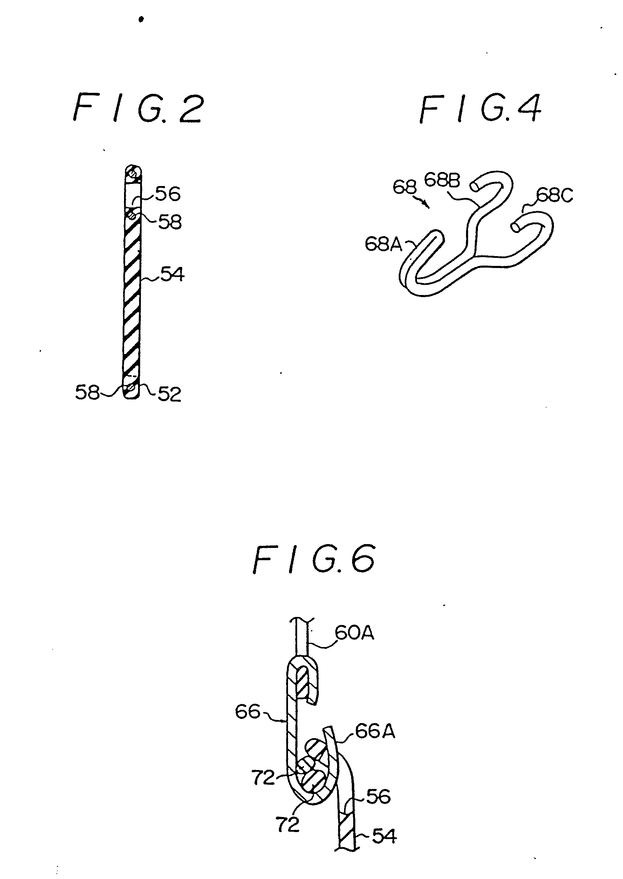

Figs. 1 and 2 show an embodiment of a fastener for a tyre slippage preventing device according to the present invention.

A fastener 50 is made of an elastic material such as rubber or urethane elastomer as one unit. It has a ring-shaped connecting portion 52, and twelve arm portions 54 which extend radialy from the connecting portion 52 at equal intervals and have the same shape. The distal end of each of the arms 54 is formed into a loop, and the central through-hole of the loop forms an engaging hole 56. A reinforcing material 58 such as cord or canvas may be sealed within the elastic material of the fastener 50 around the engaging holes 56 and at the connecting portion 52, as shown in Fig. 2.

Preferably, the radius of the connecting portion 52 is between 30 and 70 % of the distance between the center of the connecting portion 52 and the center of the engaging hole 56. More preferably, it is between 40 and 60 %, and most preferably, it is in the vicinity of 50 %.

Fig. 3 shows a body 60 of the tyre slippage preventing device which is combined with the fastener 50 of this embodiment. The body 60 is made of a net-shaped rubber with a reinforcing cord made of an organic fiber or a metal sealed therein. It is made up of outer frame portions 60A which are each substantially formed in the shape of a diamond, with the exception of the two longitudinal end portions, each of the outer frame portions 60A being formed with four small frame portions each of which are substantially formed in the shape of a diamond, and which have parts common to each other. To form the body 60, the outer frame portions 60A are connected in the longitudinal direction of the body through small frame portions 60B that also extend in the longitudinal direction of the body. Each of the two end portions of the body forms an outer frame portion 60C which consists of one small, substantially diamond-shaped frame portion and two small, substantially triangular frame portions, parts of which are common to each other. The outer frame portions 60C are each connected to the outer frame portion 60A through the small frame portions 60Bs.

At one lateral edge of the body 60, one end of a connecting fitment 62 is caulked to each of the outer frame portions 60A and one of the outer frame portions 60C. The other end of the connecting fitment 62 is caulked to an inner fastener 64 which is a rope or a wire rope made of a resin having a relatively small modulus of stretch. One end of the inner fastener 64 forms a loop portion 64A, and the other end of the inner fastener is connected to a joint hook 65 which is caulked to the outer frame portion 60C. The joint hook 65 has a hook 65A which is to be received by the loop 64A.

At the other lateral edge of the body 60, one end of a coupling fitment 66 is caulked to each of the outer frame portions 60A that are disposed in a line in the londitudinal direction of the body. The other end of the coupling fitment 66 is bent into a substantially U-shaped form toward the front of the body 60 (that is toward the front as viewed in Fig. 3) so as to form a hook 66A. A joint hook 68 is caulked to the one outer frame portion 60C. The joint hook 68 has a hook portion 68A at one end and is bifurcated to form two separate hook portions 68B and 68C at the other end, as shown in Fig. 4. One of these hook portions 68B is fixed to the outer frame portion 60C, as stated previously, and the other hook 68C is engaged with the other outer frame portion 60C.

A procedure for mounting the body 60 on a tyre 70 using the fastener of this embodiment will now be described with reference to Figs. 5 and 6.

The body 60 is placed around the tyre 70 in such a manner that the side thereof on which the inner fastener 64 is provided is disposed on the inner side of the tyre 70. The inner fastener 64 is then formed into a loop by the engagement of the hook 65A of the joint hook 65 with the loop 64A.

Subsequently, the hook 68C of the joint hook 68 is engaged with the outer frame portion 60C at the outer side of the tyre 70, and two auxiliary outer fasteners 72 which consist of elastic rings made of rubber are engaged with the hooks 66A of the coupling fitments 66 and the hook portion 68A of the joint hook 68. The holes 56 of the fastener 50 are then engaged with the hooks 66A and the hook portion 68A, so that the fastener 50 is positioned on the outer side of the tyre 70 in a state wherein the arm portions 54 of the fastener 50 are elastically deformed in the direction of tension.

Thus, the body 60 is formed into a tube-like shape, and is mounted on the tyre 70 by being fastened by means of the inner fastener 64, the auxiliary outer fasteners 72 and the fastener 50.

Since the connecting portion 52 of the fastener 50 which fastens the body 60 to the tyre 70 has a diameter larger than that of the fastener disclosed in the specification of Japanese Utility Model Laid-Open No. 110387/1983, the fastener 50 is highly effective for fastening the body 60.

More specifically, because of the relatively large diameter of the connecting portion 52, the center of pivot of each of the arm portions 54 (a portion at which it is connected to the connecting portion 52) becomes close to the body 60 and the length of each of the arm portions 54 becomes relatively short. This limits the area of movement of each of the engaging holes 56 in the circumferential direction of the tyre 70. This in turn limits the area of movement of each of the coupling fitments 66 and the joint hook 68, thereby reducing the deflection in the arrangement (an arranging pitch) of the coupling fitments 66 and joint hook 68.

If the diameter of the connecting portion 52 is excessively large, the same problem occurs as that with the outer fasteners 26 shown in Fig. 9. Therefore, it must be set to the above-described dimension. If the fastener 50 has a connecting portion 52 reinforced with the reinforcing cord 58, the connecting portion 52 hardly stretches and an increase in the diameter of the connecting portion 52 causes no problem. However, it reduces the length of the arm portions 54. This decreases the elongation of the arm portions 54 and requires a large amount of force to mount the fastener.

The structure with which the fastener 50 is connected to the body 60 is made simple, and engagement of the hooks is eliminated.

Further, since the arm portions 54 are extended radialy while they are coupled to each other at the central portion by means of the connecting portion 52, the body 60 is not shifted from the periphery of the tyre 70 so as to be wound around the axle.

In this embodiment, even if the arm portions 54 are partially cut, the fastener 50 can still serve its function as a fastener. Use of the auxiliary outer fasteners 72 together with the fastener 50 makes it possible for a vehicle to run safely for a while after the arm portions 54 or the auxiliary outer fastener 72 have been cut. Further, since the auxiliary outer fasteners 72 are engaged with the hooks 66A of the coupling fitments 66, use of the auxiliary outer fasteners 72 does not make the connecting structure between the fastener and the body 60 a complicated one.

If the spring constant of the fastener 50 is set to a value which is larger than that of this embodiment, no auxiliary outer fasteners 72 are necessary.

As will be understood from the foregoing description, according to the present invention, the fastener for the tyre slippage preventing device is capable of preventing the body of the tyre slippage preventing device from becoming disengaged from the periphery of the tyre and being dragged in toward the axle. The fastener of this invention can also be connected to the body with a simple structure.

## Claims

1. A fastener for a tyre slippage preventing device which is used to mount the body of said tyre slippage preventing device on the periphery of a tyre, characterized in that: a ring-shaped connecting portion and a plurality of arm portions extending radialy outward from said connecting portion at substantially equal intervals are formed from an elastic material as one unit, and that the distal end of each of said arm portions is provided with an egaging hole with which a fitment connected to said body of said tyre slippage preventing device is engaged.

2. A fastener for a tyre slippage preventing device according to claim 1, wherein said connecting portion and the peripehral edge portion of each of said engaging holes contain a ring-shaped reinforcing material.

3. A fastener for a tyre slippage preventing device according to claim 1, wherein said connecting portion has a ring-shaped form, each of said engaging holes has a circular form, and the radius of said connecting portion is set to a value which is 30 and 70 % of the distance between the center of said connecting portion and the center of said engaging hole.

# F I G.1

# F I G. 2

56
58
54
58 52

# F I G. 4

68 68B
68A 68C

# F I G. 6

60A
66
66A
72
72 56
54

# F I G. 3

# F I G. 5

FIG. 7

# F I G.8

# F I G. 9

# F I G.10

# F I G.11